Europäisches Patentamt

European Patent Office

Office européen des brevets

(11) Publication number: **0 311 200**
**A2**

## (12) EUROPEAN PATENT APPLICATION

(21) Application number: 88202165.2

(22) Date of filing: 30.09.88

(51) Int. Cl.4: **C08J 5/06 , C08L 21/00**

(30) Priority: 02.10.87 DE 3733432

(43) Date of publication of application:
**12.04.89 Bulletin 89/15**

(84) Designated Contracting States:
**AT BE CH DE ES FR GB GR IT LI NL SE**

(71) Applicant: **STAMICARBON B.V.**
**Mijnweg 1**
**NL-6167 AC Geleen(NL)**

(72) Inventor: **Hogenboom, Eric Henricus Maria**
**Meerssenerweg 96**
**NL-6222 AK Maastricht(NL)**
Inventor: **de Meersman, Clement Edmond**
**Limburgstraat 13**
**NL-6164 EK Geleen(NL)**

(54) Composite material, process for its production, and its use.

(57) Composite materials of polyolefin filaments of high molecular weights, in particular ultrahigh molecular weights, of especially more than 600,000 g/mol, and/or structures produced therefrom, and rubber, the adhesion of these filaments or the structures produced therefrom to the rubber being effected by means of a polymer of low molecular weight and low melting point as an adhesion promoter, which polymer is heated to a temperature above its melting or softening point and, in the softened or molten state, bonds well to both the polyolefin filaments of high strengths and to the rubber, without the higher melting or softening points of the polyolefins of high molecular weight being reached and their high tensile strength and moduli thus being impaired.

EP 0 311 200 A2

## Composite material, process for its production, and its use

The invention relates to composite materials of polymer filaments, and/or structures produced therefrom, and rubber, to a process for producing them and to their use.

Filaments of polyolefins of high molecular weights, which have high tensile strengths and moduli and, due to these properties, are suitable reinforcing materials for composite materials based on rubber matrixes, have the disadvantage that the rubber matrix has only poor adhesion to their smooth surface.

In the case of polyolefin filaments of medium or low molecular weight, it is known, for improving the adhesion to rubber matrixes, to heat the filaments to a temperature at which their surface largely softens or melts, so that firm bonding to the rubber matrix is possible. Such a procedure is unsuitable in the case of filaments of polyolefins of high molecular weights, since these polyolefins, when heated to temperatures at which their surface softens or melts, loose a very considerable part of their strength and are thus no longer suitable as reinforcing materials in rubber matrixes for the production of composite materials which are subjected to high tensile and/or compressive stresses when in use.

It was therefore the object of the invention to provide composite materials comprising filaments, and/or structures produced therefrom, of polyolefins of high molecular weight and rubber, wherein these filaments, and/or structures produced therefrom, adhere firmly to the rubber matrix, while retaining their original high tensile strengths and moduli.

This object is achieved by the composite materials according to the invention of polyolefin filaments, and/or structures produced therefrom, and rubber, in such a way that the filaments consist of polyolefins of high molecular weight and high tensile strengths and moduli and are bonded to the rubber by means of a polymer of low molecular weight and low melting point as an adhesion promoter.

In the composite materials according to the invention, the filaments, or the structures produced therefrom, of polyolefins of high molecular weight exhibit their full tensile strengths and moduli and nevertheless adhere well to the rubber matrix, so that, using the composite materials according to the invention, articles can be produced which can be subjected to high tensile and/or compressive stresses, such as, for example, pressure hoses, rubber boats and the like.

Preferably, the polyolefins, of which the filaments of high tensile strengths and moduli consist, have an ultrahigh molecular weight, especially a molecular weight of more than 600,000 g/mol (weight-average molecular weight) and are highly stretched, especially at stretching ratios of more than 20 and preferably more than 30.

These filaments are produced especially by the gel process, which comprises dissolving the polyolefin, employed for producing the filaments, in a solvent, forming the solution at a temperature above the dissolution temperature of the polyolefin to give a filament, cooling the filament, for gelling, to a temperature below the dissolution temperature and stretching the gel filament while removing the solvent. Such a process is described, for example, in GB-A 2,042,414 and 2,051,667, and in German Offenlegungsschrift 3,724,434.

The filaments of polyolefins of high molecular weight consist especially of polyethylenes, preferably linear polyethylenes. These polyethylenes can contain minor quantities, preferably at most 5 mol %, of one or more other alkenes, copolymerizable therewith, such as propylene, butylene, pentene, hexene, 4-methylpentene, octene and the like, and carry 1 to 10, especially 2 to 6, methyl or ethyl groups per 1,000 carbon atoms. However, other polyolefins can also be used, for example propylene homopolymers and copolymers, and the polyolefins employed can also contain minor quantities of one or more other polymers, especially 1-alkene polymers.

It is advantageous to improve the adhesion properties of the polyolefin filaments having high tensile strengths and moduli to the polyethylene of molecular weight used as an adhesion promoter by subjecting these filaments to a surface treatment, which does not affect their tensile strengths and moduli, for improving the adhesion, especially a plasma treatment such as is described, for example, in the European patent application filed at the European Patent Office under the internal working reference 5410 on the same date as the present application). In an analogous manner, a corona treatment or mechanical and/or chemical roughening known per se can also be used, provided that it is taken only to a level at which the strength properties are not significantly affected.

In the composite materials according to the invention, the polyolefin filaments of high tensile strengths and moduli can be used as such, but it is also possible to employ structures produced therefrom, such as yarns, woven fabrics, knitted fabrics or nonwovens, or combinations thereof.

The polymer of low molecular weight and low melting point, serving as an adhesion promoter between the polyolefin filaments, having high tensile strengths and moduli, and the rubber, is in particular a polymer which has a molecular weight of less than 200,000 g/mol, especially less than 100,000 g/mol (weight-average molecular weight), and which can be produced in a known manner. For example, such a polymer consists of a polyolefin, especially polyethylene, an ethylene/vinyl acetate copolymer or an ethylene/acrylic acid copolymer, with an ethylene content of at least 70% by weight in the copolymers, the melting point or softening point being preferably about 135°C or lower, especially between 100 and 130°C. These melting or softening points are markedly below those of the polyolefins of high molecular weight, especially ultrahigh molecular weight, which melting points are 150°C and higher. Accordingly, when the polymers of low molecular weight and low melting point are heated to their melting or softening points, those of the polyolefins of high molecular weight are not reached and, thus, their high tensile strengths and moduli are not adversely affected, as would be the case if they were heated to a temperature above their melting or softening points. The adhesion-promoting effect of the polymer of low molecular weight and low melting point is based on the fact that, in the extensively softened or molten state, it bonds well to both the polyolefin filaments of high tensile strengths and moduli, which may have been pretreated in the manner described, on the one hand and to the rubber matrix on the other hand and thus ensures firm adhesion of the polyolefin filaments of high tensile strengths and moduli to the rubber matrix.

Preferably, the polymer of low molecular weight and low melting point, used as an adhesion promoter, is employed in the form of a film, but use of a powder, granules and the like is also possible.

The rubber employed for producing the composite materials according to the invention consists preferably of a vulcanized rubber, but it is also possible to use a non-vulcanized rubber; in this case, however, the production time for the composite materials is considerably longer, since the rubber vulcanization temperature is in general above the melting or softening points of the polyolefin filaments of high tensile strengths and moduli, so that the vulcanization must be carried out at temperatures below the melting or softening points of the polyolefin filaments of high strength, and this causes longer vulcanization times than those normally used.

All known natural and/or synthetic rubbers can be used, for example chloroprene rubbers, isoprene rubbers, chloropolyethylene rubbers or chlorosulfonylpolyethylene rubbers, and also terpolymers of ethylene, propylene and alkylidenenorbornenes, and the like.

In their simplest form, the composite materials according to the invention consist of a three-ply laminate comprising a first layer of the polyolefin filaments of high tensile strengths and moduli, and/or structures produced therefrom, such as woven fabrics, knitted fabrics or nonwovens, an interlayer of the polymer of low molecular weight and low melting point, especially in the form of a film, and an adjoining third layer of a rubber of any desired thickness. However, any other configurations are also possible and, for example, several three-ply laminates of this type can be combined and, moreover, composite structures of considerable thicknesses can be produced, wherein the polymer filaments or structures produced therefrom are embedded in a rubber matrix in tailor-made arrangements.

The process for producing the composite materials according to the invention, in the case of the simplest embodiment of a three-ply laminate as described, comprises, for example, applying to a layer of filaments and/or yarns produced therefrom and/or woven fabrics, knitted fabrics or nonwovens produced from these filaments and yarns, a layer of a polymer of low molecular weight and low melting point as an adhesion promoter, in particular in the form of a film, and applying, to this film, a rubber, in particular in the form of a sheet, and then heating the resulting structure, if appropriate under pressure, to a temperature which is above the melting or decomposition point of the polyolefin of low molecular weight and below the melting point of the polyolefin of high molecular weight. The treatment with heat and, if appropriate, pressure can preferably be carried out in such a way that the structure is passed through pairs of heated pressure rollers. Advantageously, heating takes place at such temperatures until at least an extensive superficial softening or extensive superficial melting of the polymer of low molecular weight and low melting point, serving as an adhesion promoter, takes place so that this polymer bonds well to both the polyolefin filaments of high strengths and to the rubber. In an advantageous manner, however, the temperature treatment is carried out in such a way that all the polymer of low molecular weight and low melting point melts, but care must be taken not to reach a temperature which causes softening or melting of the filaments of high strengths, since these would otherwise loose their strengths.

Peeling tests carried out according to ISO Method R36, using the three-ply laminates mentioned, have shown that the peeled strengths of these laminates are about 5 to 6 times and more greater than those of laminates produced without the use of low-molecular polyolefin as an adhesion promoter.

The examples which follow illustrate the invention.

Example 1

A composite is produced from the following components:

1. A non-vulcanized rubber (Hypalon ®) of 1 mm thickness.

2. A fabric with regular rib weave (250 g/m$^3$) of highly stretched polyethylene filaments of a molecular weight of 1,000,000 g/mol (weight-average molecular weight).

3. An interpolymer consisting of an ethylene/vinyl acetate copolymer with 18 % of vinyl acetate (type no. UL 0218) having a melt index of 2 g/10 minutes and a molecular weight of 100,000 g/mol (weight-average molecular weight) and a softening point of 85° C, in the form of an 80 μm thick film.

This composite is pressed for 30 minutes at 130° C under a pressure of 10 bar.

The peel test according to ISO R36 gives a value of 15.2 N/cm, whereas a composite which has been produced without the ethylene/vinyl acetate copolymer film gives a corresponding peel test value of less than 1 N/cm.

Example 2

A composite is produced as in Example 1, but with the exception that a vulcanized neoprene rubber is used in place of the non-vulcanized rubber.

A pressing of the composite is carried out for 3 minutes at 100° C and under a pressure of 10 bar.

The results of the peel test are as follows: 13.6 N/cm when using the ethylene/vinyl acetate copolymer and less than 1 N/cm when testing a composite without this copolymer.

Example 3

A composite is prepared as in Example 1, but with the exception that the ethylene/vinyl acetate copolymer has a vinyl acetate content of 9 % (type no. 00209) and a softening temperature of 96° C.

The composite obtained is pressed for 90 minutes at a temperature of 130° C under a pressure of 10 bar.

The results of the peel test are as follows: 18.3 N/cm when using the ethylene/vinyl acetate copolymer, whereas no adhesive effect at all is found without the use of this copolymer.

Example 4

A composite is produced in the manner described in Example 1, the rubber used being an EPDM (Keltan ®) and the adhesion promoter used being a film of an LLDPE (type 2H324) having a thickness of 135 μm and a softening triangle from 94 to 122° C.

The composite is pressed for 5 minutes at 120° C under a pressure of 10 bar.

The results of the peel test are as follows: 12.0 N/cm when using the LLDPE film, whereas no adhesive effect is found when this film is omitted.

**Claims**

1. A composite material of polyolefin filaments, and/or structures produced therefrom, and rubber, wherein the filaments consist of polyolefins of high molecular weight and high tensile strengths and moduli and are bonded to the rubber by means of a polymer of low molecular weight and low melting point as an adhesion promoter.

2. A composite material as claimed in claim 1, wherein the polymer of low molecular weight and low melting point is a polymer carrying polar groups.

3. A composite material as claimed in claim 1 or 2, wherein the polymer of low molecular weight and low melting point consists of a polyolefin, an ethylene/vinyl acetate copolymer or an ethylene/acrylic acid copolymer.

4. A composite material as claimed in any of claims 1 to 3, wherein the polyolefin filaments have an ultrahigh molecular weight of more than 600,000 g/mol (weight-average molecular weight) and are highly stretched.

5. A composite material as claimed in any of claims 1 to 4, wherein the filaments have been produced by the gel process and subsequently highly stretched.

6. A composite material as claimed in any of claims 1 to 5, wherein the filaments consist of a polyethylene, especially linear polyethylene.

7. A composite material as claimed in any of claims 1 to 6, wherein the filaments are present as such in the composite material or in the form of a yarn, woven fabric, knitted fabric or nonwoven.

8. A composite material as claimed in any of claims 1 to 7, wherein the polymer of low molecular weight and low melting point, used as an adhesion promoter, has a molecular weight of less than 200,000 g/mol, especially less than 100,000 g/mol (weight-average molecular weight).

9. A composite material as claimed in any of claims 1 to 8, wherein the rubber consists of a vulcanized rubber.

10. A composite material as claimed in any of claims 1 to 9, which, in its simplest form is a three-ply material comprising a layer of filaments, and/or structures produced therefrom, of polyolefins of high molecular weight, an interlayer of a polymer of low molecular weight and low melting point as an adhesion promoter, and a rubber layer.

11. A process for producing a composite material as claimed in any of claims 1 to 10, which comprises applying to a layer of filaments of polyolefins of high molecular weight, and/or structures produced therefrom, a layer of a polymer of low molecular weight and low melting point as an adhesion promoter, in particular in the form of a film, and applying, to this layer, a rubber layer, in particular in the form of a sheet, and heating the resulting structure, if appropriate under pressure, to a temperature which is above the melting or decomposition point of the polymer of low molecular weight and low melting point and below the melting point of the polyolefin of high molecular weight.

12. The use of a composite material as claimed in any of claims 1 to 11 for producing articles which are subjected to high tensile and/or compressive stresses.